# NEUE EUROPÄISCHE PATENTSCHRIFT

(11) **EP 0 437 770 B2**
(45) Veröffentlichungstag und Bekanntmachung des Hinweises auf die Entscheidung über den Einspruch: **07.02.1996**
(45) Hinweis auf die Patenterteilung: 13.10.1993
(21) Anmeldenummer: 90124648.8
(22) Anmeldetag: 18.12.1990
(51) Int. Cl.: F16K 1/20, F16K 11/052, F16K 49/00, C21B 9/12

(54) **Gasweiche**
Gas flow diverter
Déflecteur de courants gazeux

(30) Priorität: 18.01.1990 DE 4001369
(43) Veröffentlichungstag der Anmeldung: 24.07.1991
(73) Patentinhaber: MANNESMANN Aktiengesellschaft, D-40027 Düsseldorf (DE)
(72) Erfinder: Renatus, Hans-Joachim, Dr., W-4720 Beckum-Neubeckum (DE)
(74) Vertreter: Tetzner, Volkmar, Dr.-Ing. Dr. jur.

(56) Entgegenhaltungen:
- WO-A-88/09458
- DD-A- 21 370
- DE-A- 2 607 079
- DE-U- 8 910 185
- US-A- 3 805 884
- SOVIET INVENTIONS ILLUSTRATED Derwent Publications Ltd.,
- Sektion Chemie, Woche 28, Zusammenfassung Nr. 709550 M24, 24. August 1983;& SU - A - 954424 (DNEPR UNIV) 30.08.1982

## Beschreibung

Die Erfindung betrifft eine Gasweiche für von Heißgasen durchströmte Rohrleitungen, enthaltend
a) ein Gehäuse, dessen von Heißgas durchströmter Innenraum eine Gaseintrittsöffnung und zwei Gasaustrittsöffnungen aufweist,
b) sowie einen in dem Gehäuse schwenkbar gelagerten Klappenflügel, der einen mit Hohlräumen versehenen Traggitterrahmen aufweist und in seinen beiden Endstellungen jeweils die eine Gasaustrittsöffnung verschließt und die andere freigibt,
c) wobei zwischen den die Schmalseiten des Traggitterrahmens bildenden vier Außenwänden Versteifungsstreben angeordnet sind, und
d) wobei in den die Schmalseiten des Traggitterrahmens bildenden Außenwänden des Traggitterrahmens Öffnungen vorgesehen sind, über die zumindest einige Hohlräume des Traggitterrahmens in beiden Endstellungen des Klappenflügels mit dem von Heißgasen durchströmten Innenraum des Gehäuses der Gasweiche in Verbindung stehen.

Eine Gasweiche entsprechend der vorstehend genannten Gattung ist durch die US-A-3,805,884 bekannt. Der Traggitterrahmen enhält hierbei zwei die beiden Breitseiten des Rahmens bildende Metallplatten, die mit dem Traggitter des Rahmens verschweißt sind. In den Außenwänden sowie Zwischenstegen des Traggitterrahmens sind Öffnungen vorgesehen, die eine den Traggitterrahmen durchsetzende Heißgasströmung ermöglichen. Hierdurch sollen im Betrieb die Temperaturen der die beiden Breitseiten des Traggitterrahmens bildenden Metallbleche einander angeglichen und ein Verwerfen des Traggitterrahmens vermieden werden.

Durch die WO-A-88/09 458 ist weiterhin eine Gasweiche bekannt, bei der der Klappenflügel im wesentlichen aus drei selbsttragenden Elementen besteht, nämlich einem mit Einrichtungen zur Drehlagerung versehenen zentralen Traggitterrahmen sowie zwei äußeren Dichtplatten, die jeweils eine Wärmeisolationsschicht tragen. Die im Klappenflügel vorhandenen Hohlräume sind hierbei nach außen geschlossen und isoliert.

Werden derartige Gasweichen bei hohen Temperaturen (über etwa 400 °C) eingesetzt, so tritt insbesondere bei schnellem Temperaturanstieg eine ungleichförmige Erwärmung der einzelnen Teile des Klappenflügels auf, die hohe Spannungen und Verformungen zur Folge hat, was die Dichtigkeit der Gasweiche beeinträchtigt und unter ungünstigen Umständen zu Rissen in der Konstruktion führen kann.

Durch die Verwendung von drei selbsttragend ausgebildeten Konstruktionselementen und die hierdurch bedingten beträchtlichen Abmessungen, Gewichte und Antriebsleistungen sind derartige Gasweichen darüber hinaus mit dem Nachteil eines hohen Material- und Fertigungsaufwandes behaftet.

Durch die DE-U-89 10 185 ist schließlich ein Klappenventil für Rohrleitungen großer Nennweiten bekannt, bei dem eine Blechplatte, die das Rahmenwerk des Klappenflügels einseitig verkleidet, mittels zusammenwirkender Eisenprofile schwimmend aufgehängt ist, so daß die Ventilklappe im Betrieb entlang der Dichtfläche bewegbar ist, um etwaige Verformungen der Klappe innerhalb bestimmter Toleranzen auszugleichen.

Der Erfindung liegt die Aufgabe zugrunde, eine Gasweiche entsprechend der eingangs genannten Gattung so auszubilden, daß auch bei hohen Gastemperaturen keine nennenswerten thermischen Spannungen und Verformungen im Klappenflügel auftreten.

Diese Aufgabe wird erfindungsgemäß durch folgende Merkmale gelöst:
e) der Klappenflügel weist zwei die beiden Breitseiten des Traggitterrahmens abdeckende Wärmeisolationsschichten auf;
f) zwischen dem Traggitterrahmen und den beiden Wärmeisolationsschichten ist je eine vorzugsweise aus Stahlblech bestehende Zwischenplatte vorgesehen;
g) die Außenwände und die Versteifungsstreben des Traggitterrahmens sind vorzugsweise im äußeren Bereich des Traggitterrahmens über Klemmverbindungen mit den beiden Zwischenplatten derart verbunden, daß eine begrenzte, insbesondere thermische Relativbewegung zwischen dem Traggitterrahmen und den Zwischenplatten möglich ist.

Zweckmäßige Ausgestaltungen der Erfindung sind Gegenstand der Unteransprüche.

Wenn sich der Klappenflügel der erfindungsgemäßen Gasweiche an den Dichtsitz des Gehäuses anlegt, wird durch die der Umgebung zugewandte Wärmeisolationsschicht die benachbarte Zwischenplatte und damit der Traggitterrahmen vor Abkühlung geschützt. Der Traggitterrahmen wird vom heißen Gasstrom durchsetzt und nimmt damit die im Innenraum des Gehäuses der Gasweiche herrschende Temperatur an. Die Klemmverbindungen zwischen den Außenwänden bzw. Versteifungsstreben des Traggitterrahmens und den beiden Zwischenplatten ermöglichen dabei eine begrenzte, insbesondere thermische Relativbewegung zwischen dem Traggitterrahmen und den Zwischenplatten.

Da auf diese Weise im Innern des Klappenflügels, insbesondere im Traggitterrahmen, kein nennenswertes Temperaturgefälle besteht, können sich im Klappenflügel keine größeren Spannungsdifferenzen aufbauen. Auf diese Weise ist die Dichtigkeit der Gasweiche unter allen Betriebsumständen gewährleistet, und es besteht keine Gefahr von Beschädigungen des Klappenflügels durch thermische Beanspruchung.

Da der Klappenflügel der erfindungsgemäßen Gasweiche nur ein einziges tragendes Element, nämlich den Traggitterrahmen aufweist, dessen Breitseiten unter Beifügung je einer Zwischenplatte durch die beiden Wärmeisolationsschichten abgedeckt sind, ergibt sich eine einfache Konstruktion.

Einige Ausführungsbeispiele der Erfindung sind in der Zeichnung veranschaulicht. Es zeigen
- Fig.1: einen Schnitt durch eine erfindungsgemäße Gasweiche,
- Fig.2: einen Schnitt längs der Linie II-II der Fig.1,
- Fig.3: das Detail x aus Fig.1 (in vergrößertem Maßstab),
- Fig.4: eine Variante zu Fig.3,
- Fig.5: eine Variante des Dichtungsbereiches des Klappenflügels,
- Fig.6: eine weitere Variante der erfindungsgemäßen Gasweiche.

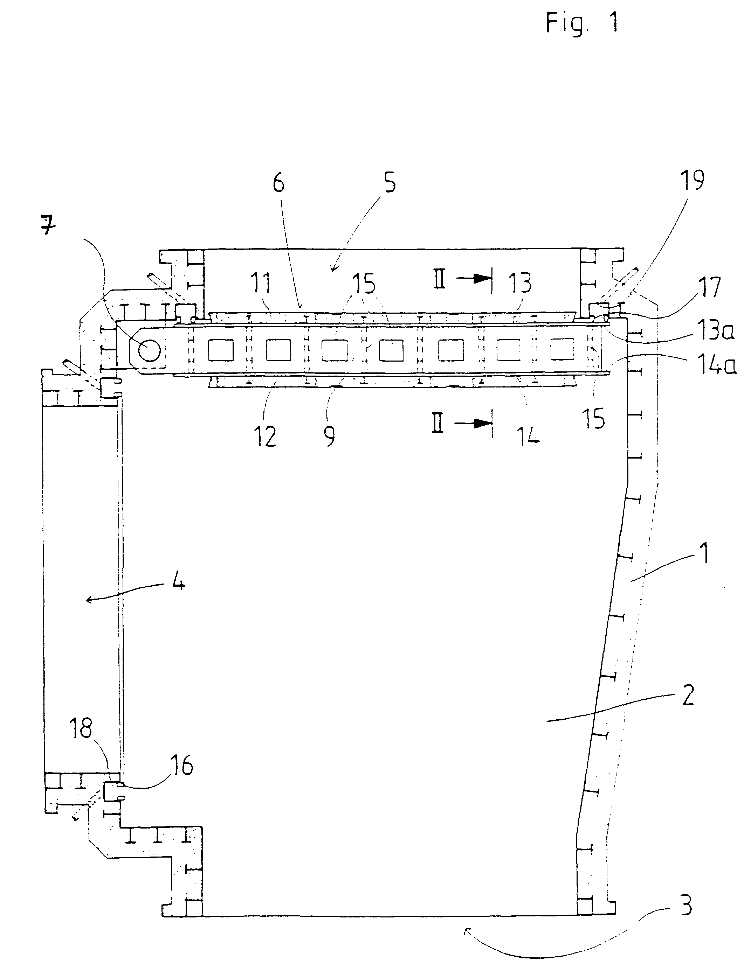

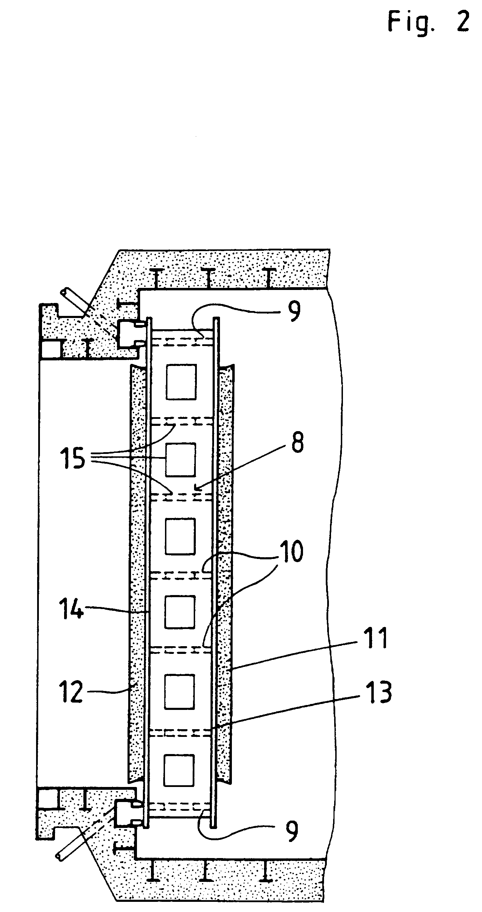

Die in den Fig.1 und 2 veranschaulichte Gasweiche enthält ein Gehäuse 1, dessen von Heißgas durchströmter Innenraum 2 eine Gaseintrittsöffnung 3 und zwei Gasaustrittsöffnungen 4 und 5 aufweist.

In dem Gehäuse 1 ist ein Klappenflügel 6 über eine Achse 7 schwenkbar gelagert. Dieser Klappenflügel 6 verschließt in der einen Endstellung die Gasaustrittsöffnung 5 (so daß der heiße Gasstrom von der Gaseintrittsöffnung 3 zur Gasaustrittsöffnung 4 strömen kann) und in der anderen Endstellung die Gasaustrittsöffnung 4 (so daß die Strömung des Gases von der Gaseintrittsöffnung 3 zur Gasaustrittsöffnung 5 freigegeben ist).

Der Klappenflügel 6 enthält einen Traggitterrahmen 8, der aus vier Außenwänden 9 und einer Anzahl von parallel zu diesen Außenwänden 9 und rechtwinklig zueinander angeordneten Versteifungsstreben 10 besteht.

Die beiden Breitseiten des Traggitterrahmens 8 werden durch Wärmeisolationsschichten 11 und 12 abgedeckt. Zwischen dem Traggitterrahmen 8 und den Wärmeisolationsschichten 11 und 12 sind noch vorzugsweise aus Stahlblech bestehende Zwischenplatten 13, 14 vorgesehen.

In den Außenwänden 9 des Traggitterrahmens 8 sowie in den Versteifungsstreben 10 sind Öffnungen 15 vorgesehen, über die alle Hohlräume des Traggitterrahmens 8 (d.h. die zwischen benachbarten Versteifungsstreben 10 sowie zwischen den Versteifungsstreben 10 und den Außenwänden 9 befindlichen Hohlräume) einerseits miteinander und andererseits mit dem von Heißgas durchströmten Innenraum 2 des Gehäuses 1 der Gasweiche in Verbindung stehen.

Das Gehäuse 1 der Gasweiche ist im Bereich der beiden Gasaustrittsöffnungen 4 und 5 mit je einem Dichtungssitz 16 bzw. 17 versehen, an dem der Klappenflügel 6 in seinen beiden Endstellungen mit einem über die Wärmeisolationsschichten 11 und 12 vorstehenden Dichtungsbereich 13a bzw. 14a der Zwischenplatten 13, 14 zur Anlage kommt.

Bei dem in den Fig.1 und 2 dargestellten Ausführungsbeispiel ist das Gehäuse 1 der Gasweiche im Bereich des Dichtungssitzes 16, 17 mit einem zur Zuführung von Sperrluft dienenden Kanal 18 bzw. 19 versehen.

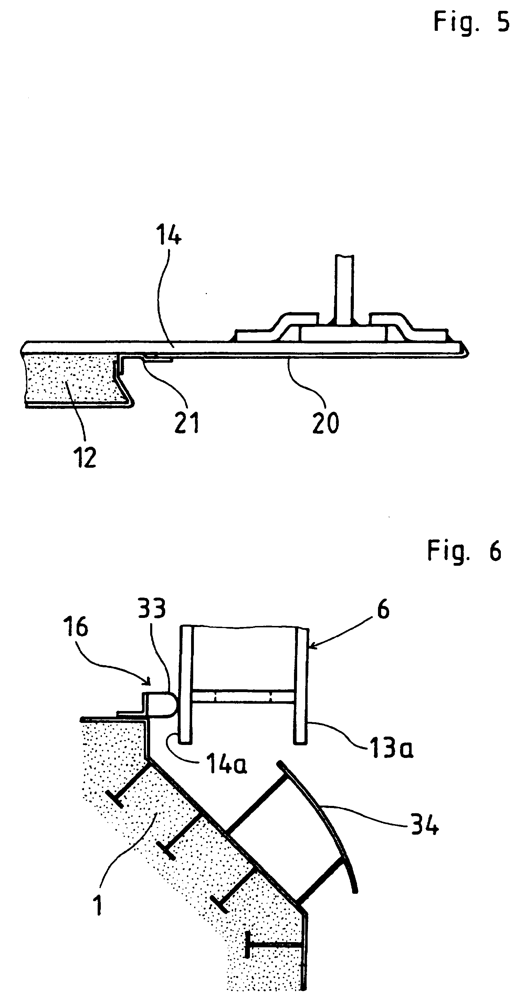

Die Zwischenplatten 13, 14 können in ihrem Dichtungsbereich 13a, 14a verstärkt ausgebildet sein. Bei dem in Fig.5 veranschaulichten Ausführungsbeispiel wird die Verstärkung der Zwischenplatten im Dichtungsbereich 13a, 14a durch einen dünnen Blechstreifen 20 gebildet, der den Sperrluftkanal 18 bzw. 19 überdeckt und vorzugsweise mit der zugehörigen Zwischenplatte (z. B. 14, vgl. Fig.5) auf der einen Seite verschweißt ist, während auf der anderen Seite eine Klammer 21 den Blechstreifen 20 so übergreift, daß eine begrenzte Bewegung des Blechstreifens 20 möglich ist. Die Temperaturdifferenz zwischen der kalten Sperrluft und der heißen Zwischenplatte 14 ruft Wärmespannungen hervor, die durch diesen Blechstreifen 20 aufgenommen und ausgeglichen werden.

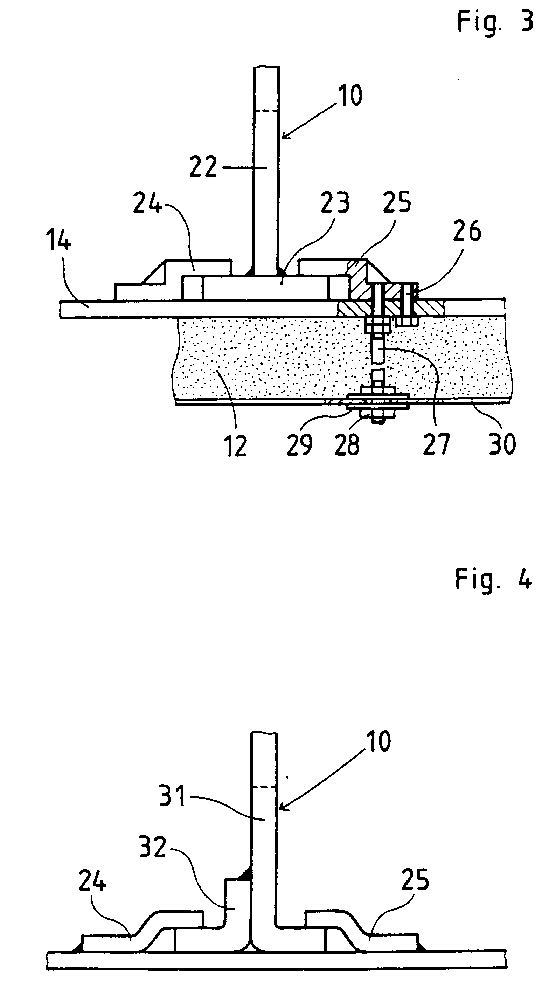

Die Fig.3 und 4 zeigen zwei Ausführungsbeispiele für die Verbindung zwischen dem Traggitterrahmen 8 und den Zwischenplatten 13, 14.

Die Versteifungsstreben 10 sowie die Außenwände 9 des Traggitterrahmens 8 besitzen ein I-förmiges Profil, das bei dem Ausführungsbeispiel gemäß Fig.3 aus Stegblechen 22 und hiermit verschweißten Querblechen 23 zusammengesetzt ist. Die die Profilenden bildenden Querbleche 23 werden hierbei von Klammern 24, 25 übergriffen, die mit der benachbarten Zwischenplatte (z.B. 14) entweder verschweißt oder durch Dehnschrauben 26 verbunden sind.

Zwischen den Klammern 24, 25 und dem Querblech 23 ist hierbei ein Spiel vorhanden, das im Bedarfsfalle eine gewisse thermische Relativbewegung zwischen dem Traggitterrahmen 8 und den angrenzenden Zwischenplatten 13, 14 ermöglicht.

Die Wärmeisolationsschicht 12 ist mit der Zwischenplatte 14 über Schrauben 27, Muttern 28 und Zwischenscheiben 29 verbunden, wobei auf der Außenseite der Wärmeisolationsschicht 12 noch ein Schutzblech 30 vorgesehen ist.

Bei dem Ausführungsbeispiel gemäß Fig.4 sind die Versteifungsstreben 10 sowie die Außenwände 9 des Traggitterrahmens 8 aus Z-förmigen Biegeteilen 31 hergestellt, an die nur im Randbereich ein winkelförmiges Stützelement 32 für die Klammern 24 und 25 angeschweißt ist (auch bei der Ausführung gemäß Fig.3 werden die Klammern 24, 25 zweckmäßig nur im Randbereich des Traggitterrahmens 8 vorgesehen).

Bei der in Fig.6 dargestellten Variante enthält der ortsfeste Dichtungssitz 16, 17 des Gehäuses 1 ein elastisches Dichtungselement 33, das durch einen Stahlblechstreifen gebildet wird, der die aus Fig.6 ersichtliche Form besitzt und an dem der Klappenflügel 6 mit seinem Abdichtungsbereich 13a bzw. 14a zur Anlage kommt.

Weiterhin ist am Gehäuse 1 ein Leitblech 34 vorgesehen, das die Durchströmung des Klappenflügels 6 durch das Heißgas fördert.

Wenn sich der Klappenflügel 6 der erfindungsgemäßen Gasweiche an den Dichtsitz 16 bzw. 17 des Gehäuses 1 anlegt und hierdurch den von Heißgas durchströmten Innenraum 2 des Gehäuses gegenüber der Umgebung abdichtet, so wird durch die der Umgebung zugewandte Wärmeisolationsschicht (z.B. 11 gemäß Fig.1) die benachbarte Zwischenplatte (z.B. 13) und damit der Traggitterrahmen 8 vor Abkühlung geschützt. Der Traggitterrahmen 8 wird vollständig und gleichmäßig von dem heißen Gasstrom durchströmt. Er nimmt somit etwa die im Innenraum 2 des Gehäuses 1 herrschende Temperatur an. Im Innern des Traggitterrahmens 8 stellt sich hierbei keine teils durch die äußere Gasströmung erzwungene, teils auf Konvektion beruhende Gasströmung ein , die zur Anpassung der Temperatur des Klappenflügels 6 an die Gastemperatur führt.

Die Wärmeisolationsschichten 11 und 12 können entweder in herkömmlicher Bauweise (unter Verwendung von Isolationsmaterial, Abstandselementen und Schutzblechen) ausgebildet sein oder in Form von Keramikplatten aufgebracht werden, die dann zweckmäßig bündig mit den aus Stahlblech bestehenden Zwischenplatten 13, 14 abschließen.

## Patentansprüche

1. Gasweiche für von Heißgasen durchströmte Rohrleitungen, enthaltend
a) ein Gehäuse (1), dessen von Heißgas durchströmter Innenraum (2) eine Gaseintrittsöffnung (3) und zwei Gasaustrittsöffnungen (4, 5) aufweist,
b) sowie einen in dem Gehäuse (1) schwenkbar gelagerten Klappenflügel (6), der einen mit Hohlräumen versehenen Traggitterrahmen (8) aufweist und in seinen beiden Endstellungen jeweils die eine Gasaustrittsöffnung verschließt und die andere freigibt,
c) wobei zwischen den die Schmalseiten des Traggitterrahmens (8) bildenden vier Außenwänden (9) Versteifungsstreben (10) angeordnet sind, und
d) wobei in den die Schmalseiten des Traggitterrahmens (8) bildenden Außenwänden (9) des Traggitterrahmens Öffnungen (15) vorgesehen sind, über die zumindest einige Hohlräume des Traggitterrahmens in beiden Endstellungen des Klappenflügels (6) mit dem von Heißgasen durchströmten Innenraum (2) des Gehäuses (1) der Gasweiche in Verbindung stehen,
gekennzeichnet durch folgende Merkmale:
e) der Klappenflügel (6) weist zwei die beiden Breitseiten des Traggitterrahmens (8) abdeckende Wärmeisolationsschichten (11, 12) auf;
f) zwischen dem Traggitterrahmen (8) und den beiden Wärmeisolationsschichten (11, 12) ist je eine vorzugsweise aus Stahlblech bestehende Zwischenplatte (13, 14) vorgesehen;
g) die Außenwände (9) und die Versteifungsstreben (10) des Traggitterrahmens (8) sind vorzugsweise im äußeren Bereich des Traggitterrahmens über Klemmverbindungen mit den beiden Zwischenplatten (13, 14) derart verbunden, daß eine begrenzte, insbesondere thermische Relativbewegung zwischen dem Traggitterrahmen (8) und den Zwischenplatten (13, 14) möglich ist.

2. Gasweiche nach Anspruch 1, dadurch gekennzeichnet, daß die Versteifungsstreben parallel zu den Außenwänden (9) und rechtwinklig zueinander angeordnet sind und eine Vielzahl von Öffnungen (15) aufweisen, über die alle Hohlräume des Traggitterrahmens (8) miteinander und mit dem von Heißgasen durchströmten Innenraum des Gehäuses (1) der Gasweiche in Verbindung stehen.

3. Gasweiche nach Anspruch 1, bei der der Klappenflügel (6) in seinen beiden Endstellungen mit einem über die Wärmeisolationsschichten (11, 12) vorstehenden Dichtungsbereich (13a, 14a) der Zwischenplatten (13, 14) an jeweils einem im Gehäuse (1) der Gasweiche vorgesehenen Dichtungssitz (16, 17) zur Anlage kommt, dadurch gekennzeichnet, daß die Zwischenplatten (13, 14) in ihrem Dichtungsbereich (13a, 14a) verstärkt ausgebildet sind.

4. Gasweiche nach Anspruch 3, dadurch gekennzeichnet, daß die Verstärkung der Zwischenplatten (13, 14) im Dichtungsbereich (13a, 14a) durch einen vorzugsweise angeschweißten dünnen Blechstreifen (20) gebildet wird.

5. Gasweiche nach Anspruch 4, bei der das Gehäuse (1) der Gasweiche im Bereich des Dichtungssitzes (16, 17) einen zur Zuführung von Sperrluft dienenden Kanal (18, 19) aufweist, dadurch gekennzeichnet, daß der zur Verstärkung der Zwischenplatten (13, 14) im Dichtungsbereich (13a, 14a) vorgesehene dünne Blechstreifen (20) den Sperrluftkanal (18, 19) überdeckt.

6. Gasweiche nach Anspruch 1 dadurch gekennzeichnet, daß die Außenwände (9) und Versteifungsstreben (10) des Traggitterrahmens (8) ein I-förmiges Profil aufweisen und mit den Zwischen platten (13, 14) über Klammern (24, 25) verbunden sind, die das Profil der Außenwände (9) und Versteifungsstreben (10) des Traggitterrahmens (8) mit Spiel übergreifen.

## Claims

1. Gas flow diverter for pipe ducts through which hot gases flow, containing
a) a housing (1) in which the interior (2) through which hot gas flows has a gas inlet opening (3) and two gas outlet openings (4, 5),
b) and a valve blade (6) which is pivotably mounted in the housing (1), has a supporting lattice frame (8) provided with cavities and which in each of its two end positions closes one gas outlet opening and clears the other,
c) reinforcing struts (10) provided between the four outer walls (9) which form the narrow sides of the supporting lattice frame (8) and
d) openings (15) provided in the outer walls (9) which form the narrow sides of the supporting lattice frame (8), by means of which in those end positions of the valve blade (6) at least some cavities of the supporting lattice frame are connected to the interior (2) of the housing (1) of the gas flow diverter through which hot gas flows,
characterized by the following features:
e) the valve blade (6) is provided with two heat insulation layers (11, 12) covering the two broad sides of the supporting lattice frame (8);
f) an intermediate plate (13, 14) which is preferably made from sheet steal, is provided between the supporting lattice frame (8) and each of the heat insulation layers (11, 12);
g) the outer walls (9) and the reinforcing struts (10) of the supporting lattice frame (8) are preferably connected to the two intermediate plates (13, 14) in the outer region of the supporting lattice frame by clamp connections in such a way that a limited, particularly thermal relative movement is possible between the supporting lattice frame (8) and the intermediate plates (13, 14).

2. Gas flow diverter as claimed in claim 1, in which the reinforcing struts (10) are arranged parallel to these outer walls and at right angles to one another and are also provided with a plurality of openings (15) by means of which all cavities of the supporting lattice frame (8) are connected to one another and to the interior (2) of the housing (1) of the gas flow diverter through which hot gases flow.

3. Gas flow diverter as claimed in claim 1, in which the valve blade (6) comes to rest in both its end positions with a sealing region (13a, 14a) of the intermediate plates (13, 14) projecting over the heat insulation layers (11, 12) on a seal seat (16, 17 respectively ) provided in the housing (1) of the gas flow diverter, characterized in that the intermediate plates (13, 14) are reinforced in their sealing region (13a, 14a).

4. Gas flow diverter as claimed in claim 3, characterized in that the reinforcement of the intermediate plates (13, 14) in the sealing region (13a, 14a) is formed by a thin sheet metal strip (20) which is preferably welded on.

5. Gas flow diverter as claimed in claim 4, in which the housing (1) of the gas flow diverter has a duct (16, 19) which serves for the supply of confining air in the region of the seal seat (16, 17), characterized in that the thin sheet metal strip (20) provided for reinforcement of the intermediate plates (13, 14) in the sealing region (13a, 14a) covers the confining air duct (18, 19).

6. Gas flow diverter as claimed in claim 1, characterized in that the outer walls (9) and reinforcing struts (10) of the supporting lattice frame (8) have an I-shaped profile and are connected to the intermediate plates (13, 14) by clamps (24, 25) which engage over the profile of the outer walls (9) and reinforcing struts (10) of the supporting lattice frame (8) with a clearance.

## Revendications

1. Dispositif d'aiguillage de la circulation dans des canalisations tubulaires balayées par des gaz chauds, comprenant:
a) une enveloppe (1) dont le volume intérieur (2) balayé par le gaz chaud comprend un orifice d'entrée des gaz (3) et deux orifices de sortie des gaz (4, 5),
b) ainsi qu'un volet (6) monté pivotant dans l'enveloppe (1) et qui comprend un châssis (8) à grilles de support comportant des cavités, ce volet occupant l'une des deux positions extrêmes obturant dans chaque cas un orifice de sortie des gaz en libérant l'autre,
c) comprenant des entretoises de rigidification (10) entre les quatre parois extérieures (9) formant les côtés étroits du châssis (8) à grilles de support,
d) comprenant des trous (15) dans les parois extérieures (9) formant les côtés étrois du châssis (8) à grilles de support, par lesquels au moins certaines cavités du châssis à grilles de support se trouvant à l'une ou l'autre des positions extrêmes du volet (6) communiquent avec le volume interne (2) de l'enveloppe (1) du dispositif d'aiguillage, qui est balayé par les gaz chauds,
caractérisé par les particularités suivantes:
e) le volet (6) comprend deux couches d'isolation thermique (11, 12) recouvrant les deux côtés larges du châssis (8) à grilles de support;
f) chacune des deux plaques intermédiares (13, 14), de préférence de tôle d'acier, est prévue entre le châssis (8) à grilles de support et les deux couches d'isolation thermique (11, 12);
g) les parois extérieures (9) et les entretoises de rigidification (10) du châssis (8) à grilles de support sont reliées, de préférence dans la zone extérieure de ce châssis, par des assemblages à agrafage aux deux plaques intermédiares (13, 14), de manière qu'un mouvement relatif limité, en particulier thermique, soit possible entre le châssis (8) à grilles de support et les plaques intermédiares (13, 14).

2. Dispositif d'aiguillage de la circulation d'un gaz selon la revendication 1, caractérisé en ce que les entretoises de rigidification sont disposés parallèlement à ces parois extérieures (9) et perpendiculairement les unes aux autres et comportent des multiples trous (15), par lesquels toutes les cavités du châssis (8) à grilles de support communiquent les unes avec les autres et avec le volume interne (2) de l'enveloppe (1) du dispositif d'aiguillage qui est balayé par les gaz chauds.

3. Dispositif d'aiguillage de la circulation d'un gaz selon la revendication 1, dans lequel le volet (6) occupant l'une ou l'autre des positions extrêmes prend appui, par une zone d'etanchéité (13a, 14a) des plaques intermédiares (13, 14) qui déborde des couches d'isolation thermique (11, 12), contre un siège d'étanchéité (16, 17) prévu dans chaque cas dans l'enveloppe (1) du dispositif d'aiguillage, caractérisé en ce que les plaques intermédiares (13, 14) sont renforcées dans leur zone d'étanchéité (13a, 14a).

4. Dispositif d'aiguillage de la circulation d'un gaz selon la revendication 3, caractérisé en ce que le renfort des plaques intermédiares (13, 14) dans la zone d'étanchéité (13a, 14a) est formé d'un feuillard mince de tôle (20) de préférence rapporté par soudage.

5. Dispositif d'aiguillage de la circulation d'un gaz selon la revendication 4, dans lequel l'enveloppe (1) du dispositif comporte, dans la zone du siège d'étanchéité (16, 17), un canal (18, 19) destiné à l'arrivée d'air d'isolation, caractérisé en ce que le feuillard mince de tôle (20) prévu pour renforcer les plaques intermédiares (13, 14) dans la zone d'étanchéité (13a, 14a) recouvre le canal (18, 19) à air d'isolation.

6. Dispositif d'aiguillage de la circulation d'un gaz selon la revendication 1, caractérisé en ce que les parois extérieures (9) et les entretoises (10) de rigidification du châssis (8) à grilles de support ont un profil en I et sont reliées aux plaques intermédiares (13, 14) par les agrafes (24, 25) qui chevauchent avec jeu le profilé des parois extérieures (9) et des entretoises (10) de rigidification du châssis (8) à grilles de support.
